# EUROPÄISCHE PATENTSCHRIFT

(11) **EP 3 482 374 B1**
(45) Veröffentlichungstag und Bekanntmachung des Hinweises auf die Patenterteilung: **16.02.2022**
(21) Anmeldenummer: 17731870.6
(22) Anmeldetag: 19.06.2017
(51) Int. Cl.: G07C 9/00, B60R 25/24

(54) **MOBILE FUNKEINHEIT FÜR EIN FAHRZEUGSCHLIESSSYSTEM**
MOBILE RADIO UNIT FOR A VEHICLE LOCKING SYSTEM
UNITÉ RADIOÉLECTRIQUE MOBILE POUR SYSTÈME DE FERMETURE DE VÉHICULE

(30) Priorität: 07.07.2016 DE 102016112525
(43) Veröffentlichungstag der Anmeldung: 15.05.2019
(73) Patentinhaber: Huf Hülsbeck & Fürst GmbH & Co. KG, 42551 Velbert (DE)
(72) Erfinder: WALLERATH, Jörg, 45134 Essen (DE)
(74) Vertreter: Zenz Patentanwälte Partnerschaft mbB
(86) Internationale Anmeldenummer: PCT/EP2017/064962
(87) Internationale Veröffentlichungsnummer: WO 2018/007138

(56) Entgegenhaltungen:
- WO-A1-2014/127324
- US-A- 5 465 094
- US-A1- 2015 291 127

## Beschreibung

Die Erfindung betrifft eine mobile Funkeinheit für ein Fahrzeugschließsystem. Insbesondere betrifft die Erfindung einen tragbaren ID-Geber (auch als Funkschlüssel bezeichnet), wie er bei drahtlos betätigten Zugangssystemen für Fahrzeuge eingesetzt wird. Derartige Zugangssysteme sind beispielsweise als "schlüssellose Zugangssysteme" oder "passive entry" Systeme bekannt.

Im Stand der Technik gibt es verschiedene Arten von schlüssellosen Zugangssystemen, wobei eine fahrzeugseitige Einheit mit Mitteln zur drahtlosen Kommunikation in eine drahtlose Verbindung mit einem mobilen ID-Geber treten kann. Der mobile ID-Geber wird vom Benutzer eines Fahrzeuges mitgeführt und dient zur Authentifizierung gegenüber dem Fahrzeug.

Das Dokument US 2014/0285319 offenbart einen solchen ID-Geber mit einem zugehörigen fahrzeugseitigen System.

Das Dokument US 2013/0143594 A1 offenbart eine alternative Gestaltung eines solchen Systems zur Funkbedienung eines Zugangssystems.

Aus der US 2014/0308971 ist ein weiteres System der eingangs genannten Art bekannt. Das letztgenannte Dokument offenbart insbesondere die Verwendung eines Ultrabreitband(UWB)-Transceivers in einem mobilen ID-Geber. Aus der US 2015/291127 A1 ist ein ID-Geber mit den Merkmalen des Oberbegriffs des Anspruchs 1 bekannt. Die WO 2014/127324 A1 offenbart einen UWB-Transceiver, bei dem die Peak-Stromaufnahme begrenzt ist.

Die Ultrabreitbandtechnologie ist seit längerem bekannt und hat Einsatzbereiche auch in Schließsystemen für Fahrzeuge. Bei dieser Art der Nahbereichsfunkkommunikation werden kurze Signalpulse abgestrahlt, wobei eine große Frequenzbandbreite erreicht wird. Diese Art der Kommunikation erlaubt unter anderem in vorteilhafter Weise eine räumliche Lagebestimmung der Kommunikationspartner. Außerdem ist eine sichere Kommunikation auch bei verschlechterten oder veränderlichen Übertragungsbedingungen möglich.

Die Lagebestimmung eines ID-Gebers gegenüber dem Fahrzeug ist zur Verhinderung von unberechtigten Zugriffen auf das Fahrzeug wichtig, insbesondere zur Verhinderung von sogenannten Relay-Station-Angriffen. Da bei einer UWB-Kommunikation Signale aufgrund der Signallaufzeit nach räumlichem Übertragungsweg unterschieden werden können, ist die Lagebestimmung besonders robust und zuverlässig.

Eine Herausforderung bei der Implementierung der UWB-Technologie in einem mobilen ID-Geber besteht in dem Energiebedarf solcher Systeme. Es sind am Markt UWB-Transceiver erhältlich, die für einen solchen Einsatz geeignet sind, hinsichtlich ihres Leistungsbedarfs die Versorgung mit Knopfzellen in einem mobilen ID-Geber regelmäßig vor Probleme stellen. Insbesondere bei einem Empfangsbetrieb eines UWB-Bausteins mit hoher Verstärkung ist der Strombedarf (für kurze Zeiten) mit mehreren 100 mA zu veranschlagen.

Der Erfindung liegt die Aufgabe zugrunde, eine verbesserte Energieversorgung für ID-Geber mit integrierten UWB-Transceivern zur Verfügung zu stellen.

Die Aufgabe wird erfindungsgemäß durch einen ID-Geber mit den Merkmalen des Patentanspruches 1 gelöst.

Wie im Stand der Technik, weist der erfindungsgemäße ID-Geber eine Batterie, eine mit der Batterie gekoppelten Mikrocontroller und einen Ultrabreitband(UWB)-Transceiver auf. Der UWB-Transceiver ist zur Ansteuerung mit dem Mikrocontroller gekoppelt.

Wie oben beschrieben, lässt der kurzseitige, erhebliche Strombedarf bei Betrieb eines UWB-Transceivers die Spannung einer herkömmlichen Energiezelle in Gestalt einer Batterie zusammenbrechen. Gemäß der Erfindung ist der UWB-Transceiver parallel zu dem Mikrocontroller über eine UWB-Kopplungsstrecke mit der Batterie wenigstens zeitweise gekoppelt. Dadurch ist der Mikrocontroller jederzeit durch Kopplung mit der Batterie versorgt. Die UWB-Kopplungsstrecke, welche parallel zu der Versorgung des Mikrokontrollers verläuft, ist hingegen mit Schaltmitteln ausgestattet, welche die UWB-Kopplungsstrecke unterbrechen und durchleitend schalten können. Der Mikrocontroller ist mit den Schaltmitteln in der UWB-Kopplungsstrecke gekoppelt, so dass der Mikrocontroller die Schaltmittel zur Versorgung des UWB-Transceivers mit der Batterie und zur Unterbrechung dieser Kopplung ansteuern kann.

Weiterhin ist eine Energiemanagement-Schaltung ausgebildet, die mit der UWB-Kopplungsstrecke gekoppelt ist. Die Energiemanagement-Schaltung verfügt über Begrenzungsmittel zur Begrenzung des Stromes durch die UWB-Kopplungsstrecke auf eine vorgegebene Stromstärke. Mit der UWB-Kopplungsstrecke ist eine erste Pufferkapazität, z. B. ein Pufferkondensator, gekoppelt. Die erste Pufferkapazität wird bis zu einem oberen Spannungs-Schwellwert (Spannungswert) aufgeladen, wobei die dazu fließende Stromstärke und der Schwellwert durch die Energiemanagement-Schaltung begrenzbar ist.

Die Energiemanagement-Schaltung ist mit der ersten Pufferkapazität derart gekoppelt und so ausgebildet, dass die Spannung der ersten Pufferkapazität erfasst wird. Die Energiemanagement-Schaltung hält die Pufferspannung der Pufferkapazität durch Ladung in einem Sollbereich. Die Energiemanagement-Schaltung ist außerdem mit dem Mikrocontroller gekoppelt und ausgebildet, um Statusinformationen zumindest bezüglich der ersten Pufferspannung der ersten Pufferkapazität an den Mikrocontroller zu übermitteln.

Die erfindungsgemäße Anordnung sorgt dafür, dass unter Steuerung des Mikrokontrollers die Spannungsversorgung und Stromversorgung des UWB-Transceivers geschaltet werden kann. Der UWB-Transceiver kann auf diese Weise gezielt für solche Zeiten mit der Batterie gekoppelt werden, wenn tatsächlich eine Übertragung gesendet oder empfangen werden soll. Gekoppelt mit dieser trennbaren UWB-Kopplungsstrecke ist die Energiemanagement-Schaltung, welche Statusinformationen zum Ladezustand und der Spannung der ersten Pufferkapazität an den Mikrocontroller liefern kann und die Ladung der Pufferkapazität auf eine Pufferspannung in einem Sollbereich kontrolliert. Der Mikrocontroller ist entsprechend mit Informationen zum Ladezustand der ersten Pufferkapazität versorgt und damit auch zur Einsatzbereitschaft des UWB-Transceivers. Während des Betriebs des UWB-Transceivers wird dieser aus den Pufferkapazitäten versorgt, es fließt aufgrund der strombegrenzten Verbindung zur Versorgungsbatterie nur wenig Strom aus der Versorgungsbatterie nach. Die Aufladung der Pufferkapazität erfolgt außerhalb der Betriebszeiten des UWB-Transceivers und immer dann, wenn der Mikrocontroller die UWB-Kopplungsstrecke zur Durchleitung schaltet, wobei jederzeit eine Strombegrenzung des Ladestroms für die erste Pufferkapazität gewährleistet ist.

Bei Durchschaltung der UWB-Kopplungsstrecke ist die erste Pufferkapazität unmittelbar mit der UWB-Kopplungsstrecke verbunden. Sie wird unter Strombegrenzung mit der Ladung aufgeladen, welche sich aus der ersten Pufferkapazität und den anliegenden Spannungen ergibt. Die Strombegrenzung verhindert, dass der parallel geschaltete Mikrocontroller während dieser Ladezeiten unterversorgt ist.

Die erfindungsgemäße Gestaltung sorgt einerseits dafür, dass während des kurzzeitigen Betriebes des UWB-Transceivers die Überbeanspruchung der Batterie ausgeschlossen wird und ein Spannungszusammenbruch verhindert wird. Außerdem wird dafür gesorgt, dass die Pufferkapazität tatsächlich nur dann geladen wird, wenn der Betrieb des UWB-Transceivers beabsichtigt ist. Dies wird durch die schaltbare Verbindung über die strombegrenzte UWB-Kopplungsstrecke realisiert.

Erfindungsgemäß ist eine zweite Pufferkapazität, z. B. ein zweiter Pufferkondensator, vorgesehen. Diese zweite Pufferkapazität ist mit dem UWB-Transceiver gekoppelt und außerdem über einen Spannungskonverter mit der UWB-Kopplungsstrecke. Die zweite Pufferkapazität wird durch die konvertierte Spannung des Spannungskonverters auf eine zweite Pufferspannung geladen. Während die UWB-Kopplungsstrecke, und mit ihr die erste Pufferkapazität, mit einem ersten Eingang des UWB-Transceivers gekoppelt sind, ist die zweite Pufferkapazität mit einem weiteren Spannungseingang des UWB-Transceivers gekoppelt.

Der UWB-Transceiver wird dadurch mit zwei verschiedenen, gepufferten Spannungen, der ersten Pufferspannung und der zweiten Pufferspannung versorgt. Die erste Pufferspannung kann dabei zur Versorgung der eigentlichen Ultrabreitbandübertragung dienen und die zweite Pufferspannung kann für alle Steueroperationen des UWB-Transceivers verwendet werden.

Die Aufladung der Pufferkapazitäten erfolgt in dieser Gestaltung außerhalb der Betriebszeiten des UWB-Transceivers und immer dann, wenn der Mikrocontroller die UWB-Kopplungsstrecke zur Durchleitung schaltet, wobei jederzeit eine Strombegrenzung der Ladeströme für die erste Pufferkapazität und die zweite Pufferkapazität gewährleistet ist. Bei Durchschaltung der UWB-Kopplungsstrecke ist die erste Pufferkapazität unmittelbar mit der UWB-Kopplungsstrecke verbunden und die zweite Pufferkapazität ist über den Gleichspannungskonverter mit der UWB-Kopplungsstrecke verbunden. Beide Kapazitäten werden dann unter Strombegrenzung mit der Ladung aufgeladen, welche sich aus der jeweiligen Kapazität und den anliegenden Spannungen ergibt. Auch bei Einsatz von diesen zwei Pufferkapazitäten sorgt die Strombegrenzung dafür, dass der parallel geschaltete Mikrocontroller während dieser Ladezeiten spannungsversorgt ist.

Bei einer Weiterbildung der Erfindung ist die Energiemanagement-Schaltung zur Erfassung der zweiten Pufferspannung an der zweiten Pufferkapazität ausgebildet. Die Energiemanagement-Schaltung übermittelt zusätzlich zu den Informationen bezüglich der ersten Pufferspannung an der ersten Pufferkapazität auch Informationen bezüglich der zweiten Pufferspannung an dem Mikrokontroller.

Der Mikrocontroller hat auf diese Weise eine erweiterte Diagnosemöglichkeit des Zustandes und der Bereitschaft des UWB-Transceivers. Nur wenn vorgegebene Ladestände bei beiden Pufferkapazitäten erreicht sind, kann der Mikrocontroller den UWB-Transceiver aktivieren, da dann eine ausreichende Versorgung des UWB-Transceivers sichergestellt ist.

In einer Weiterbildung der Erfindung ist der Mikrocontroller mit mehreren Betriebsmodi ausgebildete, wobei wenigstens ein Betriebsmodus ein energiereduzierter Betriebsmodus ist und ein weiterer Betriebsmodus ein aktiver Betriebsmodus mit gegenüber dem energiereduzierten Betriebsmodus erhöhten elektrischen Leistungsbedarf ist.

Der Mikrocontroller ist so ausgebildet, dass er nach Ansteuerung des UWB-Transceivers für einen Sendebetrieb oder Empfangsbetrieb wenigstens zeitweise aus dem aktiven Betriebsmodus in den energiereduzierten Betriebsmodus wechselt. Dies führt dazu, dass der Mikrocontroller während des Übertragungsbetriebes des UWB-Transceivers in einem energiereduzierten Betriebszustand ist und die Speisung aus den Pufferkapazitäten in geringstmöglichem Maße beansprucht. Zahlreiche handelsübliche Mikrocontroller weisen energiereduzierte Betriebszustände auf, in denen nur die nötigsten Funktionen des Mikrokontrollers aufrechterhalten werden. Andererseits kann ein energiereduzierter Betriebsmodus auch durch die Steuersoftware in angepasster Weise realisiert werden. Der Mikrocontroller wacht nach einer vorgegebenen Zeitdauer, die z. B. der erwarteten Übertragungsdauer und Aktivität des UWB-Transceivers entspricht, aus dem energiereduzierten Betriebsmodus auf. Andererseits kann vorgesehen sein, dass der Mikrocontroller durch Trigger aus dem energiereduzierten Energiemodus geweckt wird, beispielsweise nach Absinken der ersten Pufferspannung unterhalb eines vorgegebenen Schwellwerts.

In einer Weiterbildung der Erfindung ist der Mikrocontroller ausgebildet, um die UWB-Kopplungsstrecke zu unterbrechen und damit dem UWB-Transceiver von der Batterie zu entkoppeln, wenn keine Verwendung für den UWB-Transceiver besteht. Wird also festgestellt, dass keine Übertragung durch den UWB-Transceiver bevorsteht, so unterbricht der Mikrocontroller die Versorgungskopplung durch Trennung der UWB-Kopplungsstrecke. Damit wird auch eine Ladung der Pufferkapazitäten unterbrochen, da sich das Schaltmittel zwischen der Batterie und den Pufferkapazitäten befindet. Auf diese Weise wird der Energiebedarf der Gesamteinrichtung erheblich reduziert, sofern kein Übertragungsbetrieb des UWB-Transceivers benötigt wird.

In einer weiteren Ausgestaltung der Erfindung ist die Energiemanagement-Schaltung derart mit der Batterie gekoppelt, dass der aktuell fließende Batteriestrom erfasst wird. Die Energiemanagement-Schaltung kann dann, z. B. in Abhängigkeit von diesem Batteriestrom eine Strombegrenzung in der UWB-Kopplungsstrecke vornehmen. Eine Messung des Batteriestromes kann z. B. in einfacher Weise mit Hilfe eines Shunt-Widerstandes stattfinden.

In einer Weiterbildung der Erfindung wird die Information bezüglich des ermittelten Batteriestromes an den Mikrocontroller übermittelt. Der Mikrocontroller kann auf diese Weise beispielsweise angepasste Programmabläufe in Abhängigkeit von dem Batteriestrom starten.

Die Erfindung wird nun anhand der beiliegenden Figuren näher erläutert.
Figur 1 zeigt die erfindungswesentlichen Bestandteile eines erfindungsgemäßen ID-Gebers in einem Blockschaltbild;
Figur 2 zeigt ein Ablaufdiagramm zum Betrieb der erfindungsgemäßen Ausführungsform aus Figur 1.
Figur 3 zeigt beispielhaft Spannungs- und Stromsignalverläufe bei Aktivität der erfindungsgemäßen Ausführungsformen aus Figur 1;
Figur 4 zeigt die erfindungswesentlichen Bestandteile einer erfindungsgemäßen zweiten Ausführungsform des ID-Gebers in einem Blockschaltbild;

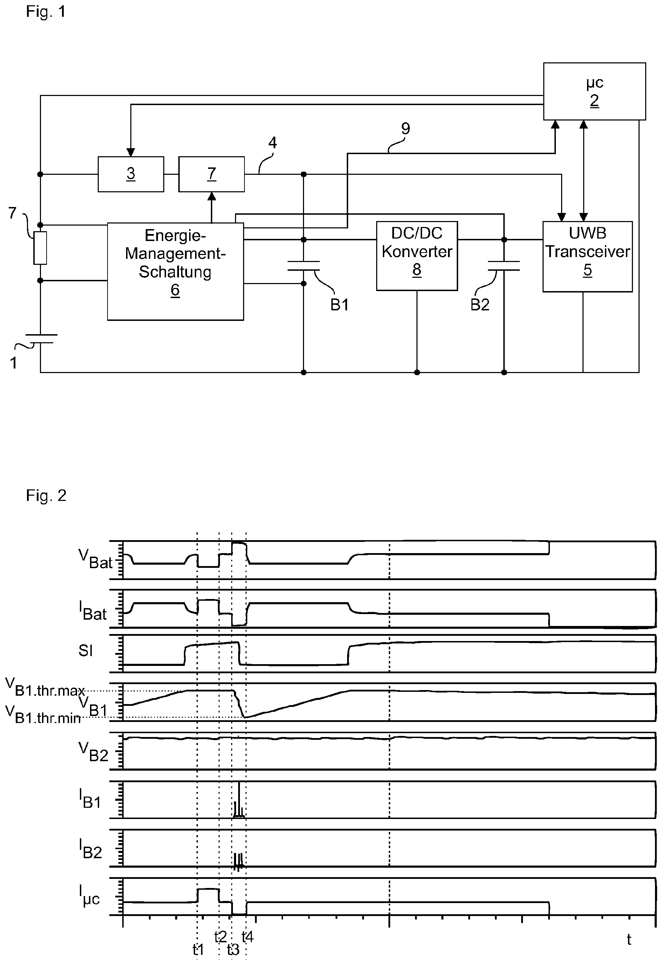

In Figur 1 sind die wesentlichen Komponenten eines ID-Gebers gemäß der Erfindung in einer ersten Ausführungsform gezeigt.

Eine Batterie 1 ist mit einem Mikrocontroller 2 zur Versorgung des Mikrocontrollers gekoppelt. Der Mikrocontroller ist mit einem steuerbaren Schalter 3 gekoppelt, der sich in einer UWB-Kopplungsstrecke 4 befindet. Die UWB-Kopplungsstrecke 4 koppelt einen Pol der Batterie 1 mit einem UWB-Transceiver 5. Unter Einwirkung des Mikrocontrollers 2 kann die Schalteinrichtung 3 die galvanische Kopplung zwischen Batterie 1 und UWB-Transceiver über die UWB-Kopplungsstrecke 4 freigeben oder aufheben.

Eine Energiemanagement-Schaltung 6 ist ebenfalls mit dem Mikrocontroller 2 gekoppelt. Die Energiemanagement-Schaltung 6 ist außerdem über einen Shunt 7 zum Abgriff einer Spannung und zur Ermittlung der Batteriestromstärke geschaltet. Die Energiemanagement-Schaltung 6 steuert einen Strombegrenzer 7, der in der UWB-Kopplungsstrecke 4 geschaltet ist. Über den Strombegrenzer 7 kann unter Kontrolle der Energiemanagement-Schaltung ein Ladestrom für einen ersten Pufferkondensator B1 begrenzt werden. Der Pufferkondensator B1 ist mit der UWB-Kopplungsstrecke zur Pufferung einer Versorgung des UWB-Transceivers 5 geschaltet. Außerdem ist die Energiemanagement-Schaltung 6 zum Spannungsabgriff an der Pufferkapazität B1 gekoppelt. Der Pufferkapazität B1 nachgeschaltet ist ein DC/DC-Konverter 8, der die Pufferspannung an B1 (oder auch an der UWB-Kopplungsstrecke 4) wandelt und eine Pufferkapazität B2 mit der gewandelten Spannung lädt. Die Pufferkapazität B2 ist ebenfalls mit dem UWB-Transceiver 5 gekoppelt, um diesen an einen zweiten Eingang mit einer Betriebsspannung zu versorgen. Die Pufferkapazität B1 puffert dabei die Versorgung für die Ultrabreitbandübertragung und die Pufferkapazität B2 puffert die Versorgung weiterer Steueroperationen des UWB-Transceivers 5.

Der Mikrocontroller 2 erhält von der Energiemanagement-Schaltung 6 über eine Signalleitung 9 Informationen zum Ladezustand der Pufferkapazität B1 (und gegebenenfalls auch der Pufferkapazität B2) und damit zu der Betriebsbereitschaft des UWB-Transceivers 5. Nur wenn die Pufferkapazität B1 aufgeladen ist, kann der UWB-Transceiver betrieben werden, ohne einen Spannungszusammenbruch an der Batterie 1 hervorzurufen. Außerdem kann die UWB-Kopplungsstrecke 4 nur dann zur Ladung der Pufferkapazitäten B1 und B2 Spannung liefern, wenn der Mikrocontroller 2 die Schalteinrichtung 3 geschlossen hat. Eine Öffnung der Schalteinrichtung 3 entkoppelt die von der Energiemanagement-Schaltung 6 gesteuerte Ladung der Pufferkapazitäten.

Figur 2 zeigt ein Beispiel für den Ablauf eines Aktivierungsvorgangs in der erfindungsgemäßen Ausführungsform. Bei Schritt 20 befindet sich der Mikrocontroller in einem Schlafmodus. Durch einen Tastendruck 21 oder Auslösung eines internen Timers 22 wird der Mikrocontroller bei Schritt 23 geweckt. Nach dem Wecken aktiviert der Mikrocontroller bei Schritt 24 die Kopplungstrecke zwischen Batterie und UWB-Transceiver sowie zwischen Batterie und Pufferkapazitäten durch Schließen der Schalteinrichtung in der UWB-Kopplungsstrecke. Die Energiemanagement-Schaltung sorgt für eine Strombegrenzung bei der Aufladung der Pufferkapazitäten B1 und B2 aus Figur 1. Die Energiemanagement-Schaltung überwacht während des Ladens bei Schritt 25 die Spannung der Pufferkapazitäten und signalisiert bei Schritt 26 den Ladezustand der Pufferkapazitäten an den Mikrocontroller. Sobald der Ladezustand der Pufferkapazitäten ausreichend ist prüft der Mikrocontroller, ob ein UWB-Betrieb erforderlich ist.

Wird bei Schritt 27 durch den Mikrocontroller festgestellt, dass kein UWB-Betrieb erforderlich ist, deaktiviert der Mikrocontroller bei Schritt 28 die UWB-Kopplungsstrecke durch Öffnung des Schalters in der Kopplungsstrecke. Wird bei Schritt 27 hingegen festgestellt, dass eine Ultrabreitbandübertragung erforderlich ist, sendet der Mikrocontroller bei Schritt 29 ein Freigabesignal an den UWB-Transceiver und wechselt unmittelbar danach, bei Schritt 30 in einen Energiesparmodus.

Bei Schritt 31 wird die UWB-Kommunikation durchgeführt. Eine UWB-Kommunikation umfasst üblicherweise eine Sequenz aus Aussendung, Empfang, Aussendung, betrachtet aus der Perspektive des ID-Gebers. Durch den vorübergehenden Ruhezustand des Mikrocontrollers steht der UWB-Kommunikation die gesamte verfügbare Ladung der Pufferkapazitäten während der Übertragung zur Verfügung. Nach erfolgter UWB-Kommunikation wird die Nachbereitung mit Auswertung der Kommunikation durch den Mikrocontroller vorgenommen und weitere Aktionen können ausgeführt werden. Danach kann der Mikrocontroller zurückkehren zu Schritt 25, wo eine erneute Ladung der Puffer und eine Überprüfung auf Erforderlichkeit des UWB-Betriebs erfolgt.

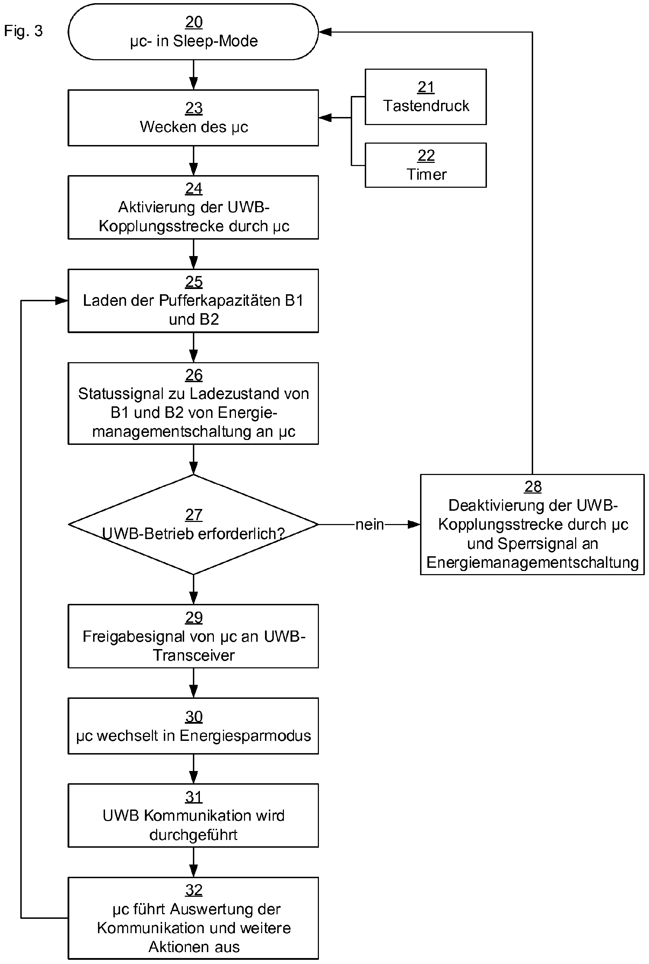

In Figur 3 sind mehrere Spannungsverläufe und Stromverläufe sowie ein Signalverlauf gezeigt, welche verschiedene Komponenten aus Figur 1 betreffen.

Zu Beginn wird der Mikrocontroller aus dem Schlafmodus geweckt und es erfolgt eine Aufladung der Pufferkapazität B1, was an dem steigenden Spannungsniveau V_{B1} erkennbar ist. Die deutlich kleinere Pufferkapazität B2 ist mit geringer Verzögerung bereits nach kurzer Zeit geladen. Während der Ladephase der Pufferkapazität B1 wird der Strom durch die Energiemanagement-Schaltung begrenzt, so dass der Strom I_{B1} durch die Pufferkapazität B1 in der Skalierung der dargestellten Art nicht erkennbar ist. Gleiches gilt für den Strom I_{B2}. Die Batteriespannung V_{Bat} ist während der Ladephase der Pufferkapazität B1 reduziert, der Strom I_{Bat} ist aufgrund der Strombegrenzung während dieser Phase konstant. Die Pufferkapazität B1 wir bis zur einer maximalen Schwellwert-Spannung bis zu einer Pufferspannung V_{B1.thr.max} aufgeladen. Die Energiemanagement-Schaltung sendet über eine Signalleitung 9 aus Figur 1 ein Signal SI, welches bei vollständiger Ladung der Pufferkapazität B1 sprunghaft ansteigt und den Ladezustand der Pufferkapazität anzeigt. Der Mikrocontrollerstrom I_{µc} steigt zum Zeitpunkt t1 sprunghaft an, wenn die Verarbeitungstätigkeit des Mikrocontrollers 2 aus Figur 1 einsetzt. Der Mikrocontroller prüft das Signal SI und prüft, ob ein Betrieb des UWB-Transceivers erforderlich ist. Beim Zeitpunkt t2 signalisiert der Mikrocontroller dem UWB-Transceiver die Betriebsfreigabe und der Mikrocontroller geht beim Zeitpunkt t3 in einen Energiesparmodus, erkennbar am verringerten Niveau von I_{µc}. Zwischen den Zeitpunkten t3 und t4 erfolgt die UWB-Kommunikation, erkennbar an drei Strompeaks, welche einen Sendevorgang, einen Empfangsvorgang und einen erneuten Sendevorgang kennzeichnen. Die Peaks sind erkennbar im Stromverlauf I_{B1} der Pufferkapazität B1 und I_{B2} der Pufferkapazität B2. Während des Betriebs des UWB-Transceivers wird die Pufferkapazität B1 bis zur unteren Versorgungsspannungsgrenze des UWB-Transceivers (zzgl. eines Sicherheitsabstandes) entladen, erkennbar am Spannungsniveau V_{B1} welches bis auf V_{B1.thr.min} absinkt. Außerdem wird das Statussignal SI angesichts der reduzierten Spannung V_{B1} zurückgesetzt. An der Batteriespannung V_{Bat} und deren Batteriestrom I_{Bat} ist erkennbar, dass während der Betriebszeit des UWB-Transceivers eine Speisung nahezu ausschließlich aus den Pufferkapazitäten B1 und B2 erfolgt. Zum Zeitpunkt t4 ist der Übertragungsvorgang abgeschlossen und der Mikrocontroller kehrt aus seinem Energiesparmodus in den Normalbetrieb zurück. Es erfolgt wiederum eine Ladung der Pufferkapazitäten B1 und B2 und das Statussignal SI steigt erneut an.

Die erfindungsgemäße Schaltung erlaubt einen verlässlichen Betrieb einer UWB-Transceiver-Schaltung in einem ID-Geber und stellt sicher, dass bei größtmöglicher Verfügbarkeit, unter Schonung der Batterie eines ID-Gebers, ein sicherer Betrieb möglich ist.

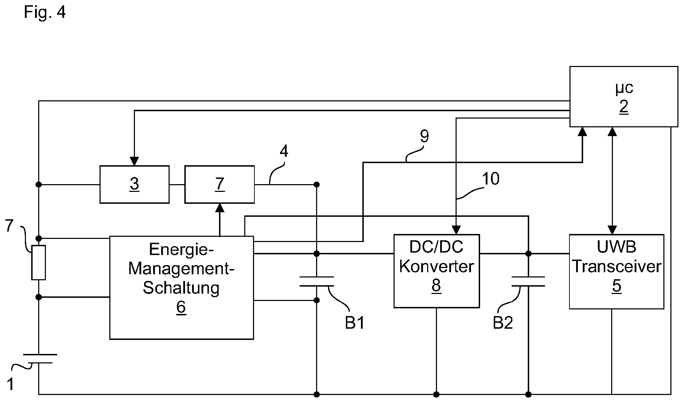

In Figur 4 ist eine alternative Ausführungsform gezeigt. Dort ist der DC/DC-Konverter 8 der Steuerung des Mikrocontrollers 2 unterstellt. Der Mikrocontroller 2 erhält Statusinformationen zum Ladestand der Pufferkapazitätten B1 und B2 und kann über eine Verbindung 10 den Konverter 8 aktivieren und deaktiviern. Dies ermöglicht eine noch bessere Implementierung der gesamten Ablaufsteuerung per Software im Mikrocontroller.

## Patentansprüche

1. ID-Geber für ein drahtloses Fahrzeug-Schließsystem, wobei der ID-Geber aufweist:
eine Batterie (1),
einen Mikrocontroller (2), welcher mit der Batterie (1) gekoppelt ist,
einen Ultrabreitband(UWB)-Transceiver (5), welcher zur Ansteuerung durch den Mikrocontroller (2) mit dem Mikrocontroller gekoppelt ist,
wobei
der Ultrabreitband-Transceiver (5) parallel zu dem Mikrocontroller über eine UWB-Kopplungsstrecke (4) mit der Batterie gekoppelt ist, **dadurch gekennzeichnet,**
**dass** ein Schaltmittel (3) in die UWB-Kopplungsstrecke (4) eingebracht ist, wobei das Schaltmittel (3) derart ansteuerbar mit dem Mikrocontroller (2) gekoppelt ist, dass der Mikrocontroller das Schaltmittel zum Aufbau und zur Aufhebung einer durchgehenden galvanischen Kopplung des Ultrabreitband-Transceivers (5) entlang der UWB-Kopplungsstrecke mit der Batterie (1) ansteuert,
wobei eine Energiemanagementschaltung (6) ausgebildet ist, welche mit der UWB-Kopplungsstrecke (4) gekoppelt ist, wobei die Energiemanagementschaltung zur Begrenzung der durch die UWB-Kopplungsstrecke geführten Stromstärke ausgebildet ist,
wobei eine erste Pufferkapazität (B1) mit der UWB-Kopplungsstrecke und der Batterie gekoppelt ist,
wobei die Energiemanagementschaltung (6) mit der ersten Pufferkapazität gekoppelt ist und eine erste Pufferspannung an der ersten Pufferkapazität erfasst,
wobei die Energiemanagementschaltung (6) mit dem Mikrocontroller (2) gekoppelt ist und ausgebildet ist, Statusinformationen zumindest bezüglich der ersten Pufferspannung an den Mikrocontroller zu übermitteln,
wobei eine zweite Pufferkapazität (B2) mit dem Ultrabreitband-Transceiver und der Batterie gekoppelt ist,
wobei der Ultrabreitband-Transceiver (5) wenigstens zwei Spannungseingänge aufweist, von denen ein erster über die UWB-Kopplungsstrecke (4) und die erste Pufferkapazität (B1) und ein zweiter über die zweite Pufferkapazität (B2) gespeist ist,
wobei ein Gleichspannungskonverter (8) zwischen der UWB-Kopplungsstrecke und der zweiten Pufferkapazität gekoppelt ist, welcher ausgebildet ist, um aus der ersten Pufferspannung eine zweite Pufferspannung zu generieren und die zweite Pufferkapazität mit der zweiten Pufferspannung zu laden.

2. ID-Geber nach Anspruch 1, wobei die Energiemanagementschaltung zur Erfassung der zweiten Pufferspannung und Übermittlung von Statusinformationen bezüglich der zweiten Pufferspannung an den Mikrocontroller ausgebildet ist.

3. ID-Geber nach einem der vorangehenden Ansprüche, wobei der Mikrocontroller mehreren Betriebsmodi ausgebildet ist, wobei wenigstens ein Betriebsmodus ein energiereduzierter Betriebsmodus ist und ein weiterer Betriebsmodus ein aktiver Betriebsmodus mit gegenüber dem energiereduzierten Betriebsmodus erhöhtem elektrischen Leistungsbedarf ist,
wobei der Mikrocontroller ausgebildet ist, nach Ansteuerung des Ultrabreitband-Transceivers wenigstens zweitweise in den energiereduzierten Betriebsmodus zu wechseln, so dass sich der Mikrocontroller zeitgleich zu einer Ultrabreitband-Kommunikation des Ultrabreitband-Transceivers im energiereduzierten Betriebszustand befindet.

4. ID-Geber nach einem der vorangehenden Ansprüche, wobei der Mikrocontroller ausgebildet ist, bei Inaktivität des Ultrabreitband-Transceivers die Schaltmittel in der UWB-Kopplungsstrecke derart anzusteuern, dass der Ultrabreitband-Transceivers entlang der UWB-Kopplungsstrecke galvanisch von der Batterie getrennt ist.

5. ID-Geber nach einem der vorangehenden Ansprüche, wobei die Energiemanagementschaltung mit der Batterie zur Überwachung des Batteriestromes gekoppelt.

6. ID-Geber nach Anspruch 5, wobei die Energiemanagementschaltung zur Übermittlung von Statusinformationen bezüglich des Batteriestromes an den Mikrocontroller ausgebildet ist.

## Claims

1. ID transponder for a wireless vehicle locking system, said ID transponder comprising:
a battery (1),
a microcontroller (2) which is coupled to the battery (1),
an ultra-wideband (UWB) transceiver (5) coupled to the microcontroller (2) for being controlled by the microcontroller,
wherein the ultra-wideband transceiver (5) is coupled to the battery in parallel with the microcontroller via a UWB coupling path (4),
**characterised in that** a switching means (3) is in place in the UWB coupling path (4), the switching means (3) being controllably coupled to the microcontroller (2) such that the microcontroller controls the switching means to establish and release a continuous galvanic coupling of the ultra-wideband transceiver (5) along the UWB coupling path to the battery (1),
wherein an energy management circuit (6) is formed which is coupled to the UWB coupling path (4), the energy management circuit being adapted to limit the current conducted through the UWB coupling path,
wherein a first buffer capacitance (B1) is coupled to the UWB coupling path and the battery,
wherein the energy management circuit (6) is coupled to the first buffer capacitance and senses a first buffer voltage at the first buffer capacitance,
wherein the power management circuit (6) is coupled to the microcontroller (2) and is adapted to transmit status information at least with respect to the first buffer voltage to the microcontroller,
wherein a second buffer capacitance (B2) is coupled to the ultra-wideband transceiver and the battery,
wherein the ultra-wideband transceiver (5) has at least two voltage inputs, a first of which is fed via the UWB coupling path (4) and the first buffer capacitance (B1) and a second of which is fed via the second buffer capacitance (B2),
wherein a DC voltage converter (8) is coupled between the UWB coupling path and the second buffer capacitance, which is adapted to generate a second buffer voltage from the first buffer voltage and to charge the second buffer capacitance with the second buffer voltage.

2. ID transponder according to claim 1, wherein the power management circuit is configured to record the second buffer voltage and transmit status information regarding the second buffer voltage to the microcontroller.

3. ID transponder according to any one of the preceding claims, wherein the microcontroller is configured to have a plurality of operating modes, at least one operating mode being an energy-reduced operating mode and another operating mode being an active operating mode with increased electrical power requirements compared to the energy-reduced operating mode,
wherein the microcontroller is designed to switch to the energy-reduced operating mode at least temporarily after activation of the ultra-wideband transceiver, so that the microcontroller is in the energy-reduced operating state at the same time as an ultra-wideband communication of the ultra-wideband transceiver.

4. ID transceiver according to any one of the preceding claims, wherein the microcontroller is configured to control the switching means in the UWB coupling path when the ultra-wideband transceiver is inactive, such that the ultra-wideband transceiver is galvanically isolated from the battery along the UWB coupling path.

5. ID transponder according to any one of the preceding claims, wherein the energy management circuit is coupled to the battery for monitoring the battery current.

6. ID transponder according to claim 5, wherein the energy management circuit is adapted to transmit status information regarding the battery current to the microcontroller.

## Revendications

1. Codeur d'identification pour un système de verrouillage de véhicule sans fil, le codeur d'identification comprenant
une batterie (1),
un microcontrôleur (2) couplé à la batterie (1),
un émetteur-récepteur à bande ultralarge (UWB) (5) qui est couplé au microcontrôleur (2) pour être commandé par ce dernier,
dans lequel l'émetteur-récepteur à bande ultralarge (5) est couplé à la batterie en parallèle avec le microcontrôleur via une connexion de couplage UWB (4),
**caractérisé en ce qu'**un moyen de commutation (3) est inséré dans la connexion de couplage UWB (4), le moyen de commutation (3) étant couplé de manière commandable au microcontrôleur (2) de telle sorte que le microcontrôleur commande le moyen de commutation pour établir et supprimer un couplage galvanique continu de l'émetteur-récepteur à bande ultralarge (5) le long de la connexion de couplage UWB avec la batterie (1),
dans lequel un circuit de gestion d'énergie (6) est formé, lequel est couplé à la connexion de couplage UWB (4), le circuit de gestion d'énergie étant formé pour limiter l'intensité du courant conduit à travers la connexion de couplage UWB,
dans lequel une première capacité tampon (B1) est couplée à la connexion de couplage UWB et à la batterie,
dans lequel le circuit de gestion d'énergie (6) est couplé à la première capacité tampon et détecte une première tension tampon aux bornes de la première capacité tampon,
dans lequel le circuit de gestion d'énergie (6) est couplé au microcontrôleur (2) et est conçu pour transmettre des informations d'état au microcontrôleur au moins en ce qui concerne la première tension tampon,
dans lequel une seconde capacité tampon (B2) est couplée à l'émetteur-récepteur à bande ultralarge et à la batterie,
dans lequel l'émetteur-récepteur à bande ultralarge (5) comprend au moins deux entrées de tension, dont une première est alimentée par l'intermédiaire de la connexion de couplage UWB (4) et de la première capacité tampon (B1) et une seconde est alimentée par l'intermédiaire de la seconde capacité tampon (B2),
dans lequel un convertisseur de tension continue (8) est couplé entre la connexion de couplage UWB et la deuxième capacité tampon, lequel est conçu pour générer une deuxième tension tampon à partir de la première tension tampon et pour charger la deuxième capacité tampon avec la deuxième tension tampon.

2. Codeur d'identification selon la revendication 1, dans lequel le circuit de gestion d'énergie est conçu pour détecter la deuxième tension de tampon et transmettre au microcontrôleur des informations d'état concernant la deuxième tension de tampon.

3. Codeur d'identification selon l'une quelconque des revendications précédentes, dans lequel le microcontrôleur est formé de plusieurs modes de fonctionnement, au moins un mode de fonctionnement étant un mode de fonctionnement à énergie réduite et un autre mode de fonctionnement étant un mode de fonctionnement actif avec un besoin en puissance électrique accru par rapport au mode de fonctionnement à énergie réduite,
le microcontrôleur étant conçu pour passer au moins en partie dans le mode de fonctionnement à énergie réduite après la commande de l'émetteur-récepteur à bande ultralarge, de sorte que le microcontrôleur se trouve dans l'état de fonctionnement à énergie réduite en même temps qu'une communication à bande ultralarge de l'émetteur-récepteur à bande ultralarge.

4. Codeur d'identification selon l'une quelconque des revendications précédentes, le microcontrôleur étant conçu pour commander, en cas d'inactivité de l'émetteur-récepteur à bande ultralarge, les moyens de commutation dans la connexion de couplage UWB de telle sorte que l'émetteur-récepteur à bande ultralarge est séparé galvaniquement de la batterie le long de la connexion de couplage UWB.

5. Codeur d'identification selon l'une quelconque des revendications précédentes, dans lequel le circuit de gestion d'énergie est couplé à la batterie pour surveiller le courant de la batterie.

6. Codeur d'identification selon la revendication 5, dans lequel le circuit de gestion d'énergie est conçu pour transmettre au microcontrôleur des informations d'état concernant le courant de la batterie.
